# EUROPEAN PATENT APPLICATION

(11) **EP 2 681 993 A1**
(43) Date of publication of application: **08.01.2014**
(21) Application number: 12007345.7
(22) Date of filing: 25.10.2012
(51) Int. Cl.: A01M 13/00

(54) **Portable electric vaporiser**

(30) Priority: 02.07.2012 AU 2012902826
(71) Applicant: Linde Aktiengesellschaft, 80331 München (DE)
(72) Inventor: Roynon, John, North Ryde, NSW 2113 (US)
(74) Representative: Gellner, Bernd

(57) **Abstract**

According to the present invention there is provided a portable electric heating apparatus suitable for use in vaporising modern fumigants which may comprise components having substantially different boiling points. The inventive apparatus is portable and adaptable for use in a variety of industrial applications, such as fumigating shipping containers to eliminate insects or other harmful organisms.

## Description

The present invention relates to heating equipment - and in particular, to a portable electric heating apparatus for use in vaporising fumigants.

The invention has been developed primarily for use in vaporising fumigants such as methyl bromide or ethyl formate in liquefied carbon dioxide (the Applicant's proprietary Vapormate® product). Vapormate® requires a boiling point of >55 °C to vaporise the product. This quality is unique to this fumigant mixture (approx 12-17% v/v ethyl formate in carbon dioxide, preferably around 16.5-16.7%) meaning conventional vaporisers without temperature control provide inconsistent results.

Although the invention will be described hereinafter with reference to this application, it will be appreciated that it is not limited to this particular field of use.

Any discussion of the prior art throughout the specification should in no way be considered as an admission that such prior art is widely known or forms part of the common general knowledge in the field.

Information contained in this patent specification may be cross-referenced against the Applicant's document: *Vapormate*® *Portable Electric Vaporiser,* available to customers from BOC Australia, from mid-July 2012 (i.e., after this provisional patent application is filed). The content of this BOC document is incorporated herein by reference in its entirety.

Methyl bromide ("MeBr") has been in use for many years as a general fumigant. In Australia, methyl bromide is the preferred fumigant required by the Australian Quarantine and Inspection Service (AQIS) for most organic goods imported into Australia. However, methyl bromide is a known ozone-depleting chemical and has been banned throughout Europe following ratification of the Montreal Protocol.

Notwithstanding, when used industrially, methyl bromide is relatively simple to vaporise; its boiling point is around 3½ °C. Due to the relatively low energy input required for vaporising methyl bromide, the equipment used is generally unsophisticated. It is typically heated within a water bath heat exchanger. The typical format is a copper heat exchanger coil submerged in a water bath heated by an LPG burner. Typically, there are no control systems or overload devices installed. The only limitation of the control is the boiling point of water itself. Such systems are not gas tight, so superheated steam cannot be generated.

The equipment used to vaporise methyl bromide tends to be either open to atmosphere or have an enclosed but unsealed unit which is not gas/leak tight. Insulation (if any) is generally basic and primitive. As the equipment is not sealed, there is no need for a pressure relief device, however, there are numerous disadvantages inherent in such systems:
● Water evaporates and has to be replenished on a regular basis
● The unit needs to be filled onsite, prior to use
● Operation site needs a water supply
● Loss of heat through water surface results in long warm-up times
● Requires LPG source to be transported with equipment
● Needs to be emptied for transport and re-filled before re-use.

Other widely-used fumigants include: phosphine, 1,3-dichloropropene, chloropicrin, methyl isocyanate, hydrogen cyanide, sulfuryl fluoride, formaldehyde and iodoform.

Vapormate® is the Applicant's proprietary formulation comprising ethyl formate (c.12-17%) in liquefied carbon dioxide. Vapormate® is intended to be a reliable, eco-friendly alternative to methyl bromide. It has no known insect resistance, low human toxicity and significantly less "withholding period" (*i.e*., hours, *cf.* days/weeks), which means that its residues quickly break down to levels occurring naturally in food and in the environment.

| Carbon Dioxide | Ethyl Formate |
|---|---|
| Molecular Weight 44 | Molecular Weight 74.1 |
| Boiling Point -78 °C | Boiling Point 54 °C |
| Critical Temperature 31 °C | Critical Temperature 235 °C |
| Relative Density (L) 1.03 | Relative Density (L) 0.92 |
| Relative Density (V) 1.52 | Relative Density (V) 2.6 |
| Vapour Pressure 57.3 barg | Vapour Pressure 0.256 barg |
| Specific Heat Capacity ∼0.8 J/g °C | Specific Heat Capacity ∼2 J/g °C |

However, compared with methyl bromide, Vapormate® is relatively difficult to vaporise. Ethyl formate has a boiling point of 54 °C, whereas carbon dioxide has a boiling point of approximately -78 °C when stored at typical pressures (e.g., 50 to 70 bar).

The appreciably different physical properties of carbon dioxide and ethyl formate are highlighted with respect to the table, above.

For Vapormate®, the boiling point is considered to be 55 °C. This is the minimum temperature that needs to be maintained to ensure that all the ethyl formate is vaporised and the product is delivered as a gas with no liquid droplets. In practice the temperature needs to be significantly higher than this to ensure that the vaporised product retains enough heat to maintain its vapour phase as it is piped from the vaporiser to the point of application.

The vaporising equipment described above was generally developed for bulk fumigation of large areas - typically, shipping containers, fumigation chambers and fumigation tents. On the other hand, the early development of Vapormate® was typically limited to dosing small volumes of gas into approximate 20 L bags of fruit or other produce. Such devices mixed Vapormate® with air to pre-dilute the gas before application. However, applying Vapormate® directly to produce at close range is limited by the fact that the two components have different specific heat capacities and different rates of expansion. This can result in high concentrations of ethyl formate coming into contact with the produce, causing phytotoxic damage; this occurs because the ethyl formate does not have the chance to expand and distribute evenly throughout the bag, resulting in ethyl formate-rich and carbon dioxide-rich regions.

Several iterations of Vapormate® vaporisers have been developed, with varying degrees of success. The early models were generally designed to deliver short bursts of gas over a period of 10 to 20 seconds. This approach can be problematic due to the way Vapormate® is released from the cylinder. As the mixture exits through the valve it is expanding and cooling due to the Joule-Thomson effect; the valve effectively acts as a nozzle. As mentioned above, the two components have different specific heat capacities and different rates of expansion. When extracted in short bursts, the general proportion of ethyl formate (c. 12-17%) in carbon dioxide can be difficult to maintain. This typically results in gas streams rich in either component. This, in turn, impacts dosing and fumigation control. The effect is much less significant when large volumes are extracted over a period of time, ensuring that a level of equilibrium is maintained within acceptable tolerances.

It is an object of the present invention to overcome or ameliorate at least one of the disadvantages of the prior art, or to provide a useful alternative. It is an object of an especially preferred form of the present invention to provide for a vaporising apparatus (preferably portable) suitable for use in vaporising fumigants such as Vapormate® such that a substantially homogeneous distribution of the fumigant components is achievable.

Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

Although the invention has been described with reference to specific examples it will be appreciated by those skilled in the art that the invention may be embodied in many other forms.

### Summary of the Invention

According to a first aspect of the present invention there is provided an apparatus for vaporising one or more volatile components within a solid or liquid fumigant, said apparatus comprising:
a container vessel for receiving and holding a substantially liquefied or substantially solidified fumigant or fumigant mixture;
input means for introducing said fumigant or fumigant mixture to said container vessel;
heating means associated with said container vessel, thereby to heat said fumigant or fumigant mixture substantially to or above its boiling point;
control means associated with said heating means and said container vessel;
output means for expelling a substantially volatilised fumigant upon reaching its boiling point.

A preferred embodiment of the invention further comprises containment means in the form of a shroud to conceal/protect interface components between the control panel and the main body of the vaporiser. This also prevents access to hot surface on the top face of the device. In another embodiment, said heating means and/or said control means are coupled with an electrical source. In yet another embodiment, said input means comprise a valve coupled with a cylinder, said cylinder containing a liquefied component of said fumigant.

Preferably, said control means are operational to raise said fumigant or fumigant mixture to a temperature substantially at or above its boiling point and to substantially maintain said temperature. In an embodiment, the apparatus is substantially interconnectable and/or portable.

In an embodiment, the heating means comprise at least one heating element and at least one heat exchanger coil, operatively associated with said control panel.

Preferably, the heating means further comprise insulation means for maintaining said container vessel at a substantially constant temperature. In a particularly preferred embodiment, said insulated heating means is by way of a vacuum insulated shell.

In an embodiment of the invention, said heating means comprise two heating elements and dual concentric heat exchanger coils operatively associated with said control panel. Preferably, said control means comprises a computer (or at least a controller comprising a small chip), thereby to monitor and adjust performance parameters such as temperature delta. Alternatively, there is no control means and the system is manually operable.

Preferably, said output means comprise an orifice plate. In another preferred embodiment, said output means comprise a pressure gauge to monitor back pressure in the system, said pressure gauge operatively associated with said control panel.

In an embodiment, the apparatus comprises a relief valve to protect said heat exchanger coil from "overpressure". Preferably, said output means comprises an insulated outlet hose to maintain the vaporised fumigant at a substantially constant temperature, tom minimise heat leak through the hose, and/or to protect an operator from potential burns. In another form, the apparatus used for vaporising said one or more volatile components within said solid or liquid fumigant or fumigant mixture.

According to a second aspect of the present invention there is provided a method of vaporising one or more volatile components within a solid or liquid fumigant or fumigant mixture, said method comprising the steps of:
providing a container vessel for receiving a substantially liquefied or substantially solidified fumigant or fumigant mixture;
providing input means for introducing said fumigant or fumigant mixture to said container vessel;
introducing said fumigant or fumigant mixture to said container vessel via said input means;
providing heating means associated with said container vessel, thereby to heat said fumigant or fumigant mixture substantially to or above its boiling point;
providing control means associated with said heating means and said container vessel;
heating said fumigant to a predetermined temperature by said heating means and substantially maintaining said temperature via said control means;
providing output means for expelling a substantially volatilised fumigant upon reaching the required temperature; and
expelling said substantially volatilised fumigant via said output means.
In a preferred embodiment, the method further comprises providing containment
means in the form of a shroud to conceal/protect interface components between the control panel and the main body of the vaporiser. This also prevents access to hot surface on the top face of the device. Preferably, said heating means and/or said control means are coupled with an electrical source.

Preferably, said input means comprise a valve coupled with a cylinder, said cylinder containing a liquefied component of said fumigant.

In another embodiment, said control means are operational to raise said fumigant or fumigant mixture to a temperature substantially above its boiling point and to substantially maintain said temperature. Ideally, at least two of said means are substantially interconnectable and/or portable.

Preferably, said heating means comprise at least one heating element and at least one heat exchanger coil, operatively associated with said control panel. In an embodiment, said heating means further comprise insulation means for maintaining said container vessel at a substantially constant temperature. More preferably, said insulated heating means is by way of a vacuum insulated shell.

According to an embodiment of the inventive method, the heating means comprise two heating elements and dual concentric heat exchanger coils operatively associated with said control panel. Preferably, said control means comprises a digital controller, thereby to monitor and adjust performance parameters such as temperature delta.

In a preferred embodiment, said output means comprise an orifice plate. In another embodiment, said output means comprise a pressure gauge to monitor back pressure in the system, said pressure gauge operatively associated with said control panel. The inventive method preferably comprises providing relief valves to protect said heat exchanger coil and oil chamber from over pressurisation or the like.

In an embodiment, said output means comprises an insulated outlet hose to maintain the vaporised fumigant at a substantially constant temperature, to prevent heat leak to the atmosphere and/or to protect an operator from potential burns.

In an embodiment, the inventive method is used for vaporising said one or more volatile components within said solid or liquid fumigant or fumigant mixture.

According to a third aspect of the present invention there is provided a fumigant or fumigant mixture, when vaporised by a method as defined according to the second aspect of the invention.

According to a fourth aspect of the present invention there is provided a method of fumigating a contaminated area, said method comprising locating an apparatus as defined according to the first aspect of the present invention within or adjacent to said contaminated area; performing the method defined according to the second aspect of the invention over a predetermined period; and containing said contaminated area for a predetermined period, thereby to actively eliminate said contamination.

According to a fifth aspect of the present invention there is provided a saleable kit for fumigating a contaminated area, said kit comprising an apparatus as defined according to the first aspect; a preferably replenishable supply of at least one fumigant material; means for associating said apparatus with said fumigant material; means for associating a volatilised fumigant material with said contaminated area; and instructions for performing said fumigation.

The vaporiser of the present invention comprises an electrically heated oil bath heat exchanger. This is designed to vaporise fumigants such as Vapormate® in a relatively controlled manner, so as to deliver a relatively steady flow of product for fumigation of large containers and tents. When used in conjunction with Vapormate® as the fumigant, the inventive vaporiser has been designed to maintain the outlet temperature above 55 °C; this is the minimum temperature required to vaporise ethyl formate, which is the active ingredient (c. 12-17%) in Vapormate®.

The invention consists of a standalone portable unit which has a fully integrated control system complete with over-temperature protection and pressure relief devices. The oil bath is a vacuum insulated, sealed system which incorporates an expansion chamber. The vacuum insulation maintains an ambient surface temperature while the system is operating at full capacity. Typical oil temperature during normal use is around 110 °C.

There should be no need, during normal operation, to replace or top-up the oil. Power is provided via two power cords each supplying 240 V/10 A to the heating elements; this delivers a total heating power of 4800 W.

The system is supplied complete with inlet and outlet assemblies incorporating temperature gauges, pressure gauge, relief valve, flow control orifice plate, inlet hose and insulated outlet hose.

The system has been designed and manufactured in accordance with the following Australian standards: (1) AS 4041 (2006) : Pressure Piping; (2) AS 3100 (1994) : Approval & Test Specification (General Requirements for Electrical Equipment); and (3) AS 60335.1 (2011) Household & Similar Electrical Appliances (General Safety).

Moreover, the equipment has been subjected to a full pressure test as follows: Oil Chamber : 600 kPa (6 barg/87 psig); and Internal Coil : 25,500 kPa (255 barg/1530 psig).

The vaporiser is constructed of stainless steel throughout, with IP66-rated electrical systems for use in outdoor/wet environments.

The fully-assembled vaporiser of the present invention comprises the following main assemblies:

### Main Body

a) Vacuum insulated oil bath
b) Oil relief valve (150 kPa)
c) Oil chamber plug
d) Vacuum retention plug
e) Internal two-stage coil (1/4" inlet 3/8" outlet)
f) Heating elements (2 x 2400 W)
g) Temperature sensors (1 x control/1 x overload)
h) Closing plate/heater mounting assembly

### Operator Interface Panel

a) Power supply cords
b) Power supply indicators
c) Digital controller
d) On/off switch - controller
e) On/off switch - heaters
f) Power supply indicators
g) Heating indicator
h) Temperature overload indicator/reset button

### Inlet Manifold

a) Vapormate inlet hose (5/32" NB x 2 m long/1/4" BSPP(F) connectors)
b) 1/4" Swagelok connection.
c) Temperature gauge (-50 °C/+50 °C)

### Outlet Manifold

a) Temperature gauge (0 °C/200 °C)
b) Pressure gauge ( 0 - 10,000 kPa)
c) Relief valve (22,000 kPa)
d) Orifice plate/flow restrictor plate (c. 1.2 mm diameter; flow rate c. 0.6 kg/min)
e) 1/4" Swagelok connection
f) Insulated outlet hose (1/4" NB x 1.5 m long c/w Swagelok 1/4" connectors). The hose is insulated with Armaflex foam and is protected by an abrasion-resistant jacket. The insulation is to retain heat in the hose and protect operators from potential burn hazards.

In respect of safety considerations, the following factors were considered in the design:

### Electrical

a) Power supplies
b) Ingress Protection
c) Hazardous atmospheres

### Mechanical

a) Inlet/outlet connections
b) Gauges
c) Relief valves

### Pressure

a) General
b) Product Supply Assembly (Cylinder/Hose/Manifold)
c) Outlet Manifold/Outlet Hose
d) Potential for liquid entrapment/expansion (relief valve)

### Temperature

a) Inlet Hose & Connections
b) Outlet Hose & Connections
c) Vaporiser Body

### Manual Handling

a) Heating

The features of the inventive design giving rise to perceptible technical effects are in general the temperature control as well as the additional safety features not seen on conventional fumigant heaters, specifically:

| **Feature** | **Significance/Effect** |
|---|---|
| Sealed Unit | No spills/Fully portable/quick setup/no top-up required/rapid warm-up |
| Oil Bath | Conventional systems use water bath - limited to 100 °C |
| Digital Temperature Control | Ability to define and maintain desired set temperature |
| Electrical Heating | Self contained, more controllable and safer than LPG |
| Thermal Overload/CutOut | Additional safety feature not present on typical fumigation heaters |
| Relief Valves | Additional safety features to protect oil bath and pipework |
| Orifice Plate | Fixed flow control to ensure product fully vaporised |

The present invention is also potentially applicable to use in explosive dust atmospheres; this of particular interest to the Australian grain industry. Foreseeably, in such applications, a revised control panel enclosure which does not impact the existing design/operation will be based on one of the standard solutions which industry-specific workers have developed for these environments. This revised design to undergo testing/approval by an approved authority.

Further refinements may relate to the temperature control system. The full capability of the digital controller has not been exploited yet. The controller has the option to run in "Hysteresis Mode" or "PID Mode" (*i.e.,* proportional-integral-derivative). The system has currently only been set up in Hysteresis Mode, which is a simple on/off mechanism based around a desired temperature set point.

On the other hand, PID control is a control loop feedback mechanism which constantly calculates the difference between the measured operating temperature and the desired set point - and controls power input accordingly. This enables more stable temperature control and minimises over/under temperature variances.

Further potential for development relates to the volume and capacity of the oil bath/coil. In a preferred embodiment of the invention, the oil bath is approximately 10.5 L and the heat exchanger coil approximately 0.5 L water volume. A larger oil bath with a longer heat exchanger coil would increase the surface area for heat transfer. This could help to increase the throughput from the current 0.5/0.6 kg/min up to 1 kg/min without an increase in power input.

This would result in a larger, heavier and more expensive vaporiser, but may be a benefit to some customers. Typical application times for shipping containers of 20 to 30 minutes are not significant when the total retention/fumigation time can be up to 24 h. A reduction in application time from 20 min to 10 min does not offer a major improvement on the overall fumigation time. The high flow option may be of interest to fumigators treating extremely large volumes, e.g., storage holds in ships, etc.

In respect of the instrumentation/digital controller outputs, the unit includes basic instrumentation to fulfil control and safety requirements. There are analogue temperature gauges on the inlet and outlet manifolds to indicate gas inlet and outlet temperatures. The outlet manifold also has an analogue pressure gauge to indicate back pressure within the system when operating.

All of these devices could be replaced with more sophisticated digital sensors which would provide greater accuracy and the potential for data logging the information.

In addition the digital temperature controller could be replaced with a more sophisticated device which could provide numerous audible/visual alarms, full data logging of all operations and facilities to download to PC/laptop via cables or wireless connections.

In respect of flow control, the outlet manifold incorporates an orifice plate to control the flow rate. This ensures that a steady flow is maintained which is not too high for the product to be fully vaporised.

The original prototype used a needle valve but it was felt the variable flow should be removed so that there was a set flow which would not exceed the vaporiser capacity. The orifice plate could be replaced with a more sophisticated flow control device which is self-monitoring/self-adjusting. Again, more sophisticated devices are probably cost prohibitive for the industry.

The invention also has scope of automated dosing. Fumigation is traditionally controlled by weight. The volume of product required to treat a chamber is based on a dose rate of grams per cubic metre. From this, a total weight of product required can be calculated. Typically, the fumigant cylinders are placed on a scale and the weight monitored during dosing. When the target weight is reached, the concentration of fumigant within the chamber is checked with a monitor.

An automated system could be developed which incorporated the data from the load cell/s so that flow is stopped automatically when the required dose weight has been dispensed.

The inventive unit also incorporates support feet. These could be replaced by lockable castors to improve mobility.

It will be appreciated by those skilled in the art that the present invention is amenable to essentially any design/shape/capacity of oil bath; heating media (oils/other heating fluids); type/shape/construction of heating element; more sophisticated/integrated control system (link in gas inlet/gas outlet temperature); different materials/methods of construction (composite mouldings/extrusions); PLC control/integrated circuit board to replace conventional electrics; and the incorporation of a load cell/weigh station for automated dosing.

### Brief Description of the Figures

A preferred embodiment of the invention will now be described with reference to the accompanying Figures, in which:

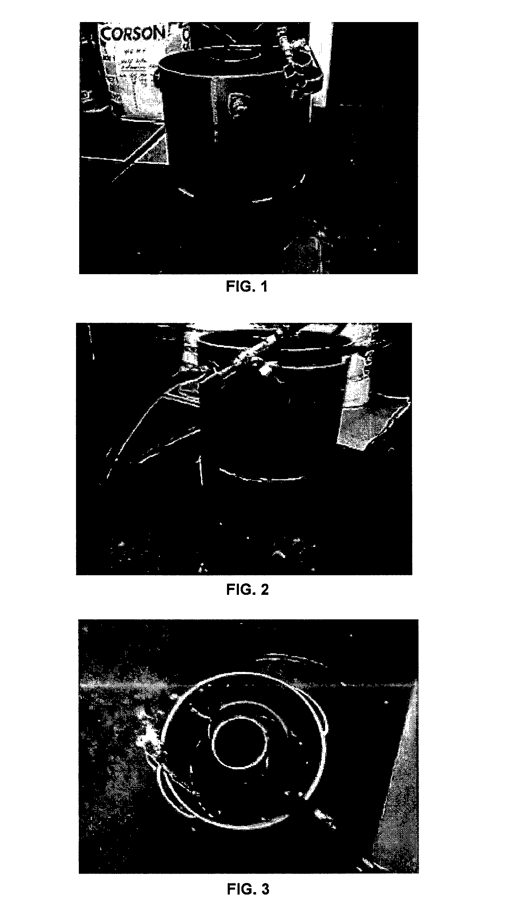

Figures 1 to 3 are representations of simple water-bath vaporisers, suitable for vaporising methyl bromide.

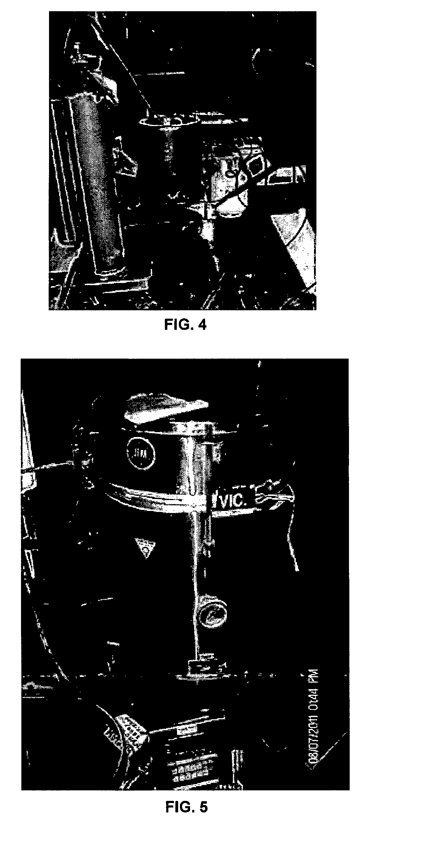

Figures 4 and 5 exemplify past refinements in vaporiser technology, combining an off-the-shelf gas water heater with an electrically heated water bath. The electrical lements/control components have been removed from the water bath, leaving only a container vessel with a temperature gauge. Again, this is gas fuelled but is not portable as it requires a plumbed in mains gas supply. The unit has no real "design" features, incorporates very little in the way of safety devices and has not undergone any formal review process.

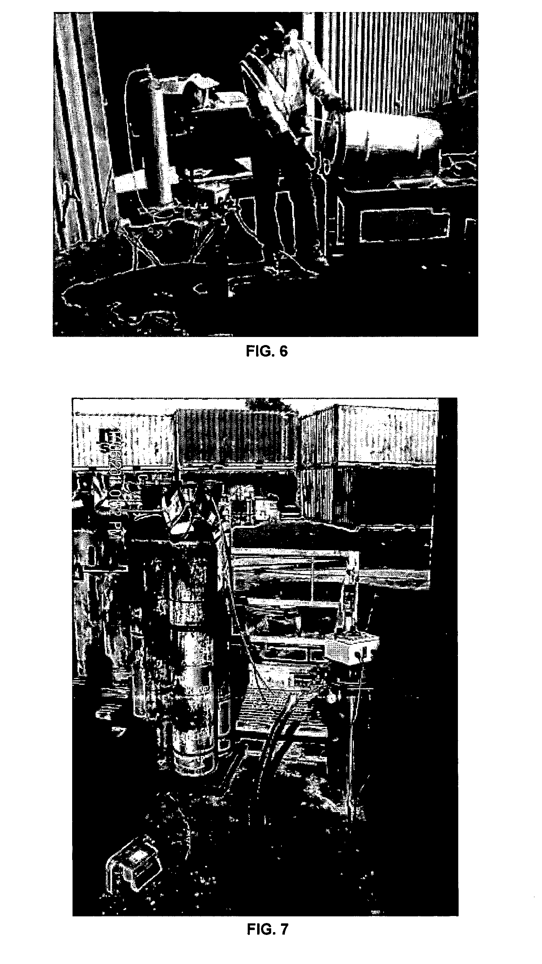

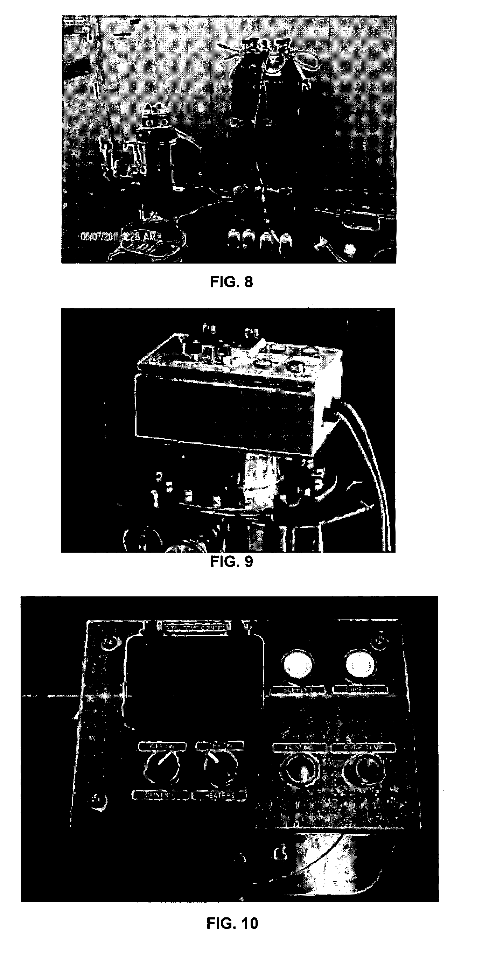

Figures 6 to 10 show a prototype of a device according to the present invention. In Figure 6, the conventional insulating material can be clearly seen wrapped around the main body. In Figures 7 and 8, the vacuum-insulated shell (to relatively minimise heat leak) can be seen on the right and left, respectively. Finally, in Figures 9 and 10, the control unit is shown, with the vaporisation temperature clearly indicated at the top left corner of Figure 10.

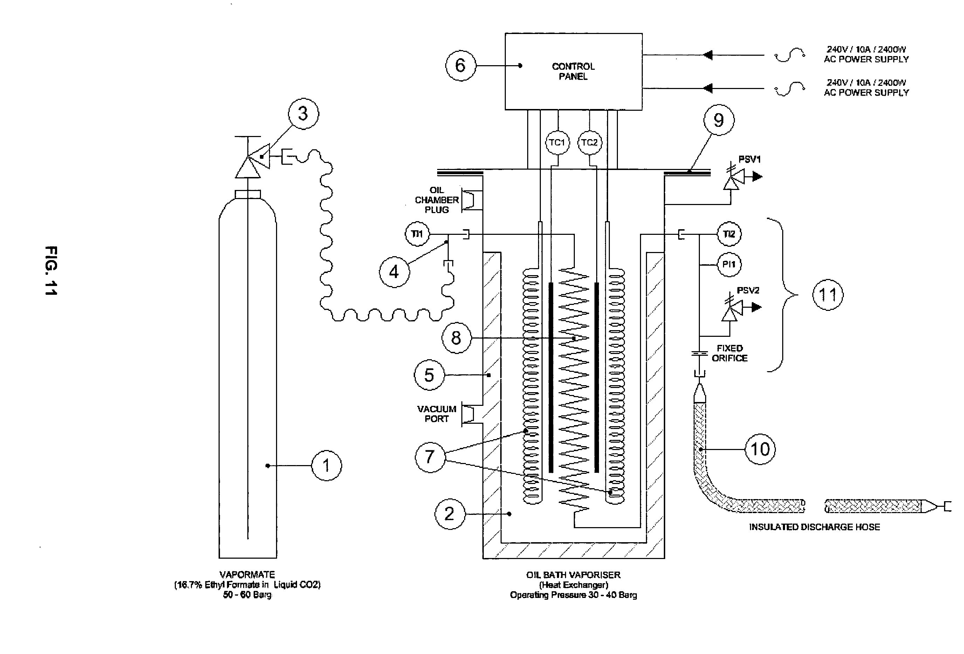

Figure 11 is a schematic diagram showing the process and componentry used according to a preferred embodiment of the present invention, in which the inventive apparatus is used to vaporise Vapormate® as the fumigant. Accordingly, with reference to Figure 11, a cylinder (1) is adapted to provide a predetermined amount of Vapormate® into a vessel (2) via the cylinder valve (3) and inlet manifold (4)

The vessel (2) comprises a vacuum insulated shell (5), designed to minimise heat leak and maintain the vessel (2) at a relatively constant temperature which is set and controlled by the control panel (6).

The control panel (6) is operatively associated with heating means comprising, in this case, two heating elements (7) and dual concentric heat exchanger coils (8). The apparatus is preferably enclosed by a sealing means (9) to contain the oil and limit the escape of heat.

Exit means are provided in the form of an insulated hose (10). The hose (10) is associated with the vessel (2) via the outlet manifold (11). When a predetermined temperature within the vessel (2) is achieved, the cylinder valve (3) is manually opened and volatilised fumigant is able to flow through the system and exit the apparatus via the insulated hose (10).

In use, a preferably integrated (or interconnectable) control panel (6) and vessel assembly (2, 4, 5, 6, 7, 8, 9, 10, 11) are placed adjacent to the container to be fumigated. Cylinder/s (1) of fumigant gas are connected to the vessel assembly via the cylinder valve (3) and inlet manifold (4), which can incorporate a fixing means in the form of a gas connector or the like. Similarly, at the exit port shown in Figure 11 by the outlet manifold (11), the insulated hose (10) is fitted to the vessel assembly. The end of the hose is connected to distribution pipework which can terminate anywhere within the container to be fumigated.

The boiling point of Vapormate® is reputed to be 55 °C. Accordingly, the control panel (6) is set to maintain the oil bath temperature sufficiently above this value to ensure volatilisation of the consistent fumigant gases.

When the required set temperature is achieved the cylinder valve (3) is manually opened to release the fumigant at a predetermined flow rate maintained by an orifice plate in the outlet manifold (11). The gases flow into the vessel (2) via their cylinder valves (3) and inlet manifold (4).

The combination of control panel (6), heating elements (7), heat exchangers (8) and insulating means (5) heat the fumigant above 55 °C, whereupon the ethyl formate (the higher boiling of the fumigant solution) vaporises. Relative homogeneity of the vessel temperature is ensured by convection and/or the relative symmetry of the heating means throughout the vessel.

As the fumigants volatilise, they are expelled through the outlet manifold (11) and insulated hose (10).

As mentioned above, it is estimated that using the inventive apparatus, a standard shipping container can be filled with a "working" quantity of gaseous Vapormate® in around 20 minutes following the initial opening of the cylinder valve (3). The apparatus is then disconnected and removed from the container. The container is then sealed for a period of approximately 24 h, whereupon any unwanted organisms are destroyed by the active fumigant gas (ethyl formate/CO₂). During this holding period the apparatus can be moved to, for instance, a neighbouring container and fumigation commenced there.

### Example 1

In a first embodiment of the present invention, a relatively primitive device is described. Such a device has one heating element, a single heat exchanger coil, poor insulation and very basic on/off controls.

### Example 2

In a refinement of the first embodiment described above, the apparatus has additional control functions and better insulation.

### Example 3

A further refinement of the present invention embodies two heating elements, dual concentric heat exchanger coils, further additions to the control unit and a vacuum-insulated shell to minimise heat leak.

Testing of this third embodiment revealed scope for a number of refinements which could be made to improve the overall performance. These included:
● Digital temperature control device with PID function
● Inlet and outlet temperature gauges to monitor temperature and performance variance
● Replacement of variable needle valve with fixed orifice plate in outlet manifold
● Pressure gauge to monitor back pressure in system
● Additional relief valve to protect heat exchanger coil/pipework
● Insulated outlet hose to maintain product temperature and protect operator against potential burns
● Replacement of external variable overload setting with internal fixed setting
● Addition of overload reset button
● Shroud to conceal electrical interface between panel and vaporiser body
● Wider base plate for improved stability
● Adjustable feet
● Bracketing and support for inlet/outlet manifolds & relief valves
● Low level vent line for relief valve.

Although the invention has been described with reference to specific examples it will be appreciated by those skilled in the art that the invention may be embodied in many other forms.

## Claims

1. An apparatus for vaporising one or more volatile components within a solid or liquid fumigant, said apparatus comprising:
a container vessel for receiving and holding a substantially liquefied or substantially solidified fumigant or fumigant mixture;
input means for introducing said fumigant or fumigant mixture to said container vessel;
heating means associated with said container vessel, thereby to heat said fumigant or fumigant mixture substantially to or above its boiling point;
control means associated with said heating means and said container vessel;
output means for expelling a substantially volatilised fumigant upon reaching its boiling point.

2. An apparatus according to claim 1, further comprising containment means in the form of a shroud to conceal/protect interface components between the control panel and the main body of the vaporiser.

3. An apparatus according to claim 1 or claim 2, wherein said heating means and/or said control means are coupled with an electrical source.

4. An apparatus according to any one of the preceding claims, wherein said input means comprise a valve coupled with a cylinder, said cylinder containing a liquefied component of said fumigant.

5. An apparatus according to any one of the preceding claims, wherein said heating means further comprise insulation means, especially for maintaining said container vessel at a substantially constant temperature..

6. An apparatus according to any one of the preceding claims, wherein said heating means comprise two heating elements and dual concentric heat exchanger coils operatively associated with said control panel.

7. An apparatus according to any one of the preceding claims, comprising a relief valve to protect said heat exchanger coil and oil chamber from over pressurisation or the like.

8. An apparatus according to any one of the preceding claims, wherein said output means comprises an insulated outlet hose to maintain the vaporised fumigant at a substantially constant temperature, to prevent heat leak to the atmosphere and/or to protect an operator from potential burns.

9. A method of vaporising one or more volatile components within a solid or liquid fumigant or fumigant mixture, said method comprising the steps of:
providing a container vessel for receiving a substantially liquefied or substantially solidified fumigant or fumigant mixture;
providing input means for introducing said fumigant or fumigant mixture to said container vessel;
introducing said fumigant or fumigant mixture to said container vessel via said input means;
providing heating means associated with said container vessel, thereby to heat said fumigant or fumigant mixture substantially to or above its boiling point;
providing control means associated with said heating means and said container vessel;
heating said fumigant to a predetermined temperature by said heating means and substantially maintaining said temperature via said control means;
providing output means for expelling a substantially volatilised fumigant upon reaching the required temperature; and
expelling said substantially volatilised fumigant via said output means.

10. A method according to claim 9, wherein said control means are operational to raise said fumigant or fumigant mixture to a temperature substantially above its boiling point and to substantially maintain said temperature.

11. A method according to any one of claims 9 or 10, wherein said heating means comprise at least one heating element and at least one heat exchanger coil, operatively associated with said control panel.

12. A method according to any one of claims 9 to 11, wherein said output means comprise a pressure gauge to monitor back pressure in the system, said pressure gauge operatively associated with said control panel.

13. A method according to any one of claims 9 to 12, when used for vaporising said one or more volatile components within said solid or liquid fumigant or fumigant mixture.

14. A method of fumigating a contaminated area, said method comprising locating an apparatus as defined according to claim 1 within or adjacent to said contaminated area; performing the method defined according to claim 9 over a predetermined period; and containing said contaminated area for a predetermined period, thereby to actively eliminate said contamination.
